# EUROPEAN PATENT SPECIFICATION

(11) **EP 3 202 975 B1**
(45) Date of publication and mention of the grant of the patent: **19.08.2020**
(21) Application number: 15846694.6
(22) Date of filing: 16.09.2015
(51) Int. Cl.: D06N 3/14, D06M 13/322, D06M 15/564, D06N 3/00, C08J 9/00

(54) **METHOD FOR MANUFACTURING SHEET-LIKE PRODUCT**
VERFAHREN ZUR HERSTELLUNG EINES BLATTARTIGEN PRODUKTS
PROCÉDÉ DE FABRICATION D'UN PRODUIT DE TYPE FEUILLE

(30) Priority: 30.09.2014 JP 2014201542
(43) Date of publication of application: 09.08.2017
(73) Proprietor: Toray Industries, Inc., Tokyo 103-8666 (JP)
(72) Inventor: MURAHARA, Hisashi, Anpachi-gun Gifu 503-2395 (JP); NAKAI, Shunichiro, Otsu-shi Shiga 520-8558 (JP); ISHIKANE, Masayuki, Anpachi-gun Gifu 503-2395 (JP)
(74) Representative: Mewburn Ellis LLP
(86) International application number: PCT/JP2015/076252
(87) International publication number: WO 2016/052189

(56) References cited:
- JP-A- S 542 302
- JP-A- S52 151 701
- JP-A- 2005 248 415
- JP-A- 2014 025 165
- US-A- 3 695 924

## Description

### Technical Field

The invention relates to an environmentally friendly manufacture method for sheet-like articles that does not use an organic solvent in the manufacture process and particularly relates to a manufacture method for sheet-like articles that are high in moist heat resistance and good in surface quality and texture.

### Background Art

Sheet-like articles made up mainly of a fibrous base material containing cloth, such as nonwoven fabric, and polyurethane have excellent features that natural leathers do not have, and are widely utilized in various uses such as artificial leather. In particular, a sheet-like article that employs a fibrous base material containing polyester based fiber is excellent in light resistance, and therefore its use has spread year by year to products such as clothing, chair upholstery, automotive interior finishing materials, etc.

To produce such a sheet-like article, a generally adopted method is a combination of processes in which a fibrous base material is impregnated with an organic solvent solution of polyurethane and then the fibrous base material obtained is immersed in water or an aqueous solution of an organic solvent that is a non-solvent for polyurethane, so as to achieve wet coagulation of the polyurethane. Here, examples of the organic solvent for polyurethane include water-miscible solvents such as N,N-dimethyl formamide. However, since organic solvents are generally high in harmfulness to the human body and the environment, there is strong demand for a sheet-like article production technique that does not use an organic solvent.

As a concrete solution means therefor, for example, a method that employs a water dispersed polyurethane liquid obtained by dispersing polyurethane in water, instead of a conventional organic solvent based polyurethane, has been proposed.

However, sheet-like articles produced by impregnating a fibrous base material with a water dispersed polyurethane liquid and then coagulating the polyurethane generally have the problem of easily deteriorating in physical properties when wet. Developing a crosslinked structure in polyurethane has been proposed as a technique to depress such deterioration in physical properties that can occur when water dispersed polyurethane is applied.

Specifically, there is a proposed method in which a water dispersed polyurethane liquid containing a crosslinking agent is added to a fibrous base material that includes cloth such as nonwoven fabric, followed by heating to cause the crosslinking agent to react during the coagulation of the polyurethane to develop a crosslinked structure in the polyurethane (see Patent documents 1 and 2).

However, the reaction of a crosslinking agent tends to cause the water dispersed polyurethane to develop a stiff texture, and there have been no reports that propose a technique that serves to maintain the texture possessed by the material before crosslinking.

Patent document 1: JP 2013-083031A and Patent document 2: JP 2008-248174A. US3695924A discloses a method in which a sheet is impregnated with a water based polyurethane-polyurea emulsion. N-methylol resins are proposed as optional crosslinking agents. JP S542302A shows a method in which a dyed polyester raised textile is impregnated with a urethane aqueous dispersion resin emulsion, a crosslinker is applied and heat treatment carried out at 95 to 105°C. JP S52151701A shows a method in which a nonwoven fabric is impregnated with an aqueous dispersion containing polyurethane. The impregnated, entangled nonwoven fabric was subsequently impregnated with a polyisocyanate resin and cured at 50°C.

### Summary of the Invention

In view of the background relating to the above conventional techniques, an object of the present invention is to provide a method in which a sheet-like article that has high moist heat resistance and has good surface quality and texture can be produced, regardless of the coagulation technique used for the water dispersible polyurethane, by an environmentally friendly manufacturing process that is designed to cause reaction of a crosslinking agent while maintaining the texture possessed by the material before crosslinking.

The present invention aims to meet the above object and the sheet-like article production method according to the present invention is designed to form a sheet prepared by impregnating a fibrous base material with water dispersed polyurethane as binder followed by coagulating it, adding a crosslinking agent thereto, and heating to produce a sheet-like article, in a method as defined in the accompanying claim 1.

According to a preferred embodiment of the sheet-like article production method of the present invention, the quantity of the crosslinking agent added after the coagulation of the water dispersed polyurethane accounts for 0.5 mass% or more and 10.0 mass% or less of the water dispersed polyurethane.

According to a preferred embodiment of the production method for the sheet-like article of the present invention, the quantity of the crosslinking agent added before the coagulation of the water dispersed polyurethane accounts for 0.0 mass% or more and 3.0 mass% or less of the water dispersed polyurethane.

According to a preferred embodiment of the production method for the sheet-like article of the present invention, the quantity of the crosslinking agent added before the coagulation of the water dispersed polyurethane accounts for 0.0 mass% or more and 0.5 mass% or less of the water dispersed polyurethane.

In a preferred embodiment of the production method for the sheet-like article according to the present invention, the water dispersed polyurethane contains a hydrophilic group in the polymer compound.

In a preferred embodiment of the production method for the sheet-like article according to the present invention, the fibrous base material includes ultrafine fiber-generating type fiber and/or ultrafine fiber.

The present invention can provide a method in which a sheet-like article that has high moist heat resistance and has good surface quality and texture can be produced, regardless of the coagulation technique used for the water dispersible polyurethane, by an environmentally friendly manufacturing process that is designed to cause reaction of a crosslinking agent while maintaining the texture possessed by the material before crosslinking.

### Description of Preferred Embodiments of the Invention

The present invention applies an environmentally friendly water dispersed polyurethane and cause the water dispersed polyurethane to coagulate in a fibrous base material followed by adding a crosslinking agent and then heating it to cause the crosslinking agent to react with the polyurethane, allowing the crosslinking reaction with the water dispersed polyurethane to occur regardless of the method used for the coagulation of the polyurethane. In addition, a good texture equivalent to that of the material before the addition of a crosslinking agent can be maintained. This is inferred to be because, unlike the conventional case where a water dispersed polyurethane liquid containing a crosslinking agent is added, crosslinking reaction with a crosslinking agent proceeds after the formation of a structure (separation between hard segment parts and soft segment parts) caused by coagulation of the polyurethane, allowing the polyurethane to maintain its original coagulation structure.

### [Method for producing sheet-like articles]

Described specifically below is the production method for the sheet-like article according to the present invention. As described above, the present invention provides a production method for sheet-like articles that is designed to prepare a sheet by impregnating a fibrous base material with water dispersed polyurethane as binder followed by coagulating it, adding a crosslinking agent thereto, and heating to produce a sheet-like article.

As the fibrous base material for use in the invention, cloth such as woven fabric, knitted fabric, and nonwoven fabric can be adopted favorably. Among others, the use of nonwoven fabric is preferable because the sheet-like article will have good surface quality after being subjected to surface hair raising treatment. The fibrous base material for use in the invention may be a laminate containing layers of these woven fabric, knitted fabric, or nonwoven fabric.

The fibrous base material for use in the invention may be either short-fiber nonwoven fabric or long-fiber nonwoven fabric, but short-fiber nonwoven fabric is preferred because good surface quality attributed to raised hairs with a uniform length is obtained.

The short fibers in the short-fiber nonwoven fabric preferably have a fiber length of 25 mm to 90 mm, more preferably 35 mm to 75 mm. A fiber length of 25 mm or more makes it possible to obtain a sheet-like article that has high abrasion resistance due to entanglement. Furthermore, controlling the fiber length at 90 mm or less makes it possible to obtain a sheet-like material with further improved quality.

As the fiber that constitutes the fibrous base material, it is possible to employ a fiber made up of a melt-spinnable thermoplastic resin such as polyesters including polyethylene terephthalate, polybutylene terephthalate, polytrimethylene terephthalate, and polylactic acid; polyamides including 6-nylon and 66-nylon; and others including acryl, polyethylene, polypropylene, and thermoplastic cellulose. Particularly, it is preferable to use polyester fibers from the viewpoint of strength, dimensional stability, and light resistance. Furthermore, the fibrous base material may be composed mainly of a mixture of fibers of difference materials.

The cross-sectional shape of fiber used for the present invention may be circular, and it also may be a deformed shape such as elliptic, flattened, polygonal such as triangular, fan-shaped and cross.

The average fiber diameter of the fibers constituting a fibrous base material is preferably 0.1 to 7 µm, more preferably 0.3 to 5 µm. An average fiber diameter of 7 µm or less allows the fibrous base material to have a more flexible feel. An average fiber diameter of 0.1 µm or more, on the other hand, ensures improved color development after dyeing.

In the case where the fibrous base material used for the present invention is a nonwoven fabric, a woven fabric or a knitted fabric may be combined with the nonwoven fabric in order to improve strength and the like. The combination of a nonwoven fabric with a woven fabric or knitted fabric may be achieved by laminating a nonwoven fabric with a woven fabric or knitted fabric, or inserting a woven fabric or knitted fabric into a nonwoven fabric. In this case, it is preferable, among others, to use a woven fabric from the viewpoint of expected improvement in morphological stability and strength.

Single yarns (warp and weft) that constitute such woven or knitted fabric may be those of synthetic fiber such as polyester fiber and polyamide fiber, but from the viewpoint of color fastness, they are preferably single yarns of the same fiber material as the ultrafine fibers that finally constitute the cloth such as nonwoven fabric.

With respect to the type of these single yarns, they may be filament yarns or spun yarns, and they are preferably in a hard twist form. In particular, the use of filament yarns is preferable because spun yarns are likely to suffer a loss of surface fuzzing.

When hard twist yarns are to be used, their twist count is preferably 1,000 T/m or more and 4,000 T/m or less, more preferably 1,500 T/m or more and 3,500 T/m or less. If the twist count is less than 1,000 T/m, the hard twist yarns will suffer more frequent breakage of constituent filaments during the needle punching treatment, leading to products with deteriorated physical characteristics and exposure of many filaments from the product surface. If the twist count is more than 4,000 T/m, on the other hand, breakage of filaments can be depressed, but the hard twist yarns that constitute the woven fabric or knitted fabric will become too stiff, tending to results in a hard texture.

For the invention, furthermore, it is preferable that fibers obtained from ultrafine fiber-generating type fibers be used as fibrous base material. The use of fibers obtained from ultrafine fiber-generating type fibers in fibrous base material serves for stable formation of entangled bundles of the ultrafine fibers described above.

In the case where the fibrous base material is a nonwoven fabric, it is preferable for the nonwoven fabric to have a structure formed by the entanglement of bundles (fiber bundles) of ultrafine fibers. The entanglement of bundles of ultrafine fibers allows the sheet-like article to have improved strength. Such a nonwoven fabric can be produced by entangling ultrafine fiber-generating type fibers first and then converting them into ultrafine fibers.

Adoptable ultrafine fiber-generating type fibers include: island-in-sea type composite ones produced by using two thermoplastic resins different in solubility in a solvent as sea component and island component and dissolving and removing the sea component by using a solvent or the like to allow the island component to be left to form ultrafine fibers; and splittable type composite ones produced by alternately disposing two thermoplastic resins, radially or in layers, in the cross section thereof and splitting and separating the two components to form ultrafine fibers.

In particular, island-in-sea type composite fibers are preferred from the viewpoint of the flexibility and texture of the resulting sheet-like article because the removal of the sea regions will leave moderate gaps among island regions, i.e., among ultrafine fibers.

Island-in-sea type composite fibers include island-in-sea type composite fibers produced by using a spinneret designed for island-in-sea type composite fibers to spin fibers in which two components, i.e. sea and island, are mutually arrayed, and blend-spun fibers produced by spinning a mixture of two components for sea and island, of which the island-in-sea type composite fibers have been used favorably because they can serve to produce ultrafine fibers with uniform fineness and also produce ultrafine fibers with an adequate length to ensure the production of a sheet-like article with increased strength.

Usable materials for the sea component of island-in-sea type composite fibers include polyethylene, polypropylene, polystyrene, polyester copolymers of sodiumsulfoisophthalic acid, polyethylene glycol, or the like, polylactic acid, and polyvinyl alcohol. Particularly preferable is copolymerized polyester produced from, for example, sodium sulfoisophthalic acid and polyethylene glycol, both of which are alkali resolvable and capable of being decomposed without using an organic solvent, and also preferable are polylactic acid and polyvinyl alcohol that is soluble in hot water.

With respect to the ratio between the sea component and the island component in island-in-sea type composite fiber, it is preferable for the island fiber to account for 0.2 to 0.9, more preferably 0.3 to 0.8, by mass of the island-in-sea type composite fiber. If the mass ratio between the sea component and the island component is 0.2 or more, this ensures a small sea component removal ratio and leads to improved productivity. If the mass ratio is 0.9 or less, the fiber-opening capability of the island fiber will improve, and confluence of streams of the island component can be prevented. The number of island component streams can be controlled by appropriately adjusting the spinneret design.

The maximum diameter of each filament that constitutes the ultrafine fiber-generating type fiber, such as island-in-sea type composite fiber, is preferably 5 to 80 µm, more preferably 10 to 50 µm. If the filament fineness is less than 5 µm, the fiber will be low in strength and tends to suffer from filament breakage during treatment steps such as needle punching as described later. If the filament fineness is more than 80 µm, on the other hand, treatment steps such as needle punching may fail to produce entanglement efficiently.

Usable methods for obtaining a nonwoven fabric to be used as fibrous base material for the present invention include the method of entangling a fiber web by needle punching or water jet punching, as well as the spun-bond method, melt-blow method, and paper making method. In particular, methods containing a needle punching or water jet punching step are used favorably in order to obtain such ultrafine fiber bundles as described above.

To produce an integrated laminate of a woven fabric or knitted fabric and a nonwoven fabric to be used as fibrous base material, needle punching treatment, water jet punching treatment, etc., are used favorably from the viewpoint of efficient entanglement of fibers. In particular, needle punching treatment is used favorably from the viewpoint of orienting the fibers in the vertical direction of the fibrous base material regardless of the thickness of the sheet.

The needle used for needle punching treatment preferably has 1 to 9 barbs. The use of at least one needle barb allows fibers to be entangled efficiently. The use of 9 or less needle barbs, on the other hand, prevents fibers from being damaged significantly. The use of more than 9 needle barbs will lead to significant fiber damage and deterioration in product appearance due to needle marks left on the fibrous base material.

If a nonwoven fabric is to be integrated with a woven fabric or knitted fabric by entanglement, it is preferable for the nonwoven fabric to have preliminary entanglement, which serves to prevent significant crease generation when inseparably combining the nonwoven fabric with a woven fabric or knitted fabric by needle punching treatment. Thus, when a method designed to developing preliminary entanglement in advance by needle punching treatment is adopted, it is effective to perform it with a punching density of 20 punches/cm² or more. It is preferable for the preliminary entanglement to be performed with a punching density of 100 punches/cm² or more, and it is more preferable for the preliminary entanglement to be performed with a punching density of 300 punches/cm² to 1300 punches/cm².

This is because if the punching density for preliminary entanglement is less than 20 punches/cm², the width of the nonwoven fabric can decrease during the steps of entanglement with a woven fabric or knitted fabric and subsequent needle punching treatment, possibly making it impossible to obtain a fibrous base material with a smooth surface due to creases in the woven fabric or knitted fabric attributable to changes in the width. If the punching density for preliminary entanglement is more than 1,300 punches/cm², on the other hand, the entanglement in the nonwoven fabric itself proceeds to an excessive degree and the fibers will not be able to move easily to realize sufficient entanglement with the fibers in the woven fabric or knitted fabric, which is disadvantageous for achieving a inseparably integrated structure in which the nonwoven fabric and the woven fabric or knitted fabric are entangled strongly.

When fibers constituting the nonwoven fabric are entangled by needle punching treatment for the present invention, the punching density is preferably in the range of 300 punches/cm² to 6,000 punches/cm², more preferably 1,000 punches/cm² to 3,000 punches/cm², regardless of whether a woven fabric or knitted fabric exists or not.

To get a nonwoven fabric entangled with a woven fabric or knitted fabric, woven fabric or knitted fabric layers are laid over one or both sides of the nonwoven fabric, or woven fabric or knitted fabric layers are inserted between a plurality of nonwoven fabric layers, followed by needle punching to cause entanglement of fibers to provide a fibrous base material.

When performing water jet punching, it is preferable to use water in a columnar form. Specifically, it is preferable to perform water jet punching by squirting water through a nozzle with a diameter of 0.05 to 1.0 mm under a pressure of 1 to 60 MPa.

The nonwoven fabric formed of ultrafine fiber-generating type fibers processed by needle punching or water jet punching preferably has an apparent density of 0.13 to 0.45 g/cm³, more preferably 0.15 to 0.30 g/cm³. An apparent density of 0.13 g/cm³ or more makes it possible to produce artificial leather having sufficiently high morphological stability and dimensional stability. An apparent density of 0.45 g/cm³ or less, on the other hand, serves to maintain adequate spaces to accommodate a polymer elastomer.

The thickness of the fibrous base material is preferably 0.3 mm or more and 6.0 mm or less, more preferably 1.0 mm or more and 3.0 mm or less. If the thickness of the fibrous base material is less than 0.3 mm, the resulting sheet-like article may suffer from poor morphological stability. A thickness of more than 6.0 mm tends to lead to frequent occurrence of needle breakage in the needle punching step.

It is preferable from the viewpoint of achieving a high fiber density that the nonwoven fabric formed of ultrafine fiber-generating type fibers obtained as described above be shrunk by dry heat and/or wet heat to ensure an further increased fiber density.

When using island-in-sea type composite fiber, the sea removal treatment intended to remove the sea component from the island-in-sea type composite fiber may be performed either before or after adding a water dispersed polyurethane dispersion liquid, which contains water dispersed polyurethane, to the fibrous base material. If the sea removal treatment is carried out before the addition of the water dispersed polyurethane dispersion liquid, the abrasion resistance of the sheet-like article increases because a structure in which the polyurethane adheres directly to the ultrafine fibers is easily formed so that the ultrafine fibers can be firmly held.

On the other hand, if inhibitory agents such as cellulose derivatives and polyvinyl alcohol (hereinafter occasionally abbreviated as PVA) are added together with ultrafine fibers before adding a water dispersed polyurethane dispersion liquid, followed by adding a water dispersed polyurethane dispersion liquid, the contact between the ultrafine fibers and polyurethane resin can be weakened to achieve a more flexible texture.

Such addition of an inhibitory agent may be performed either before or after the sea removal treatment. The addition of an inhibitory agent before sea removal treatment works to enhance the morphology retention capability of the fibrous base material during the sea removal treatment step where the unit weight of the fiber tends to decrease to cause a decline in the tensile strength of the sheet. Accordingly, this ensures not only stable processing of thin sheets, but also an increase in thickness retention capability of the fibrous base material during the sea removal treatment step, serving to prevent the density of the fibrous base material from increasing. On the other hand, adding an inhibitory agent after sea removal treatment works to increase the density of the fibrous base material. Either of the procedures may be adopted to meet particular purposes.

PVA is used favorably as such an inhibitory agent as described above because it serves effectively to reinforce the fibrous base material and will not be dissolved easily in water. Of the various PVAs, those with higher saponification degrees, which are lower in solubility in water, will work more effectively to impede the contact between the ultrafine fiber and the polyurethane because elution of the inhibitory agent is prevented during the addition of a water dispersed polyurethane dispersion liquid.

For the highly saponified PVA to be used, the degree of saponification is preferably 95% or more and 100% or less, more preferably 96.5% or more and 100% or less. If the degree of saponification is 95% or more, the elution during the addition of a water dispersed polyurethane dispersion liquid can be depressed.

Furthermore, the PVA preferably has a degree of polymerization of 500 or more and 3,500 or less, more preferably 500 or more and 2,000 or less. If the degree of polymerization of the PVA is 500 or more, the highly saponified PVA will not undergo significant elution during the addition of the polyurethane dispersion liquid, whereas if the degree of polymerization of the PVA is less than 3,500, on the other hand, the solution of the highly saponified PVA will not become too high in viscosity and the addition of the highly saponified PVA to the fibrous base material can be performed stably.

The quantity of the PVA to be added is preferably 0.1 mass% to 80 mass%, more preferably 5 mass% or more and 60 mass% or less, relative to the quantity of the fibrous base material that will remain in the final product. If the quantity of the highly saponified PVA added is 0.1 mass% or more, the morphological stability is maintained high during the sea removal treatment step and poor contact between ultrafine fibers and polyurethane can be prevented, whereas if the quantity of the highly saponified PVA added is 80 mass% or less, the contact between ultrafine fibers and polyurethane will not become too poor and uniform raised hairs will be formed, serving to provide a product with uniform surface quality.

To add an inhibitory agent as described above to the fibrous base material, the process of dissolving the inhibitory agent in water, impregnating the fibrous base material with it, and heat-drying it is used favorably because this allows the inhibitory agent to be added uniformly. With respect to the drying temperature, a long drying time will be necessary if the temperature is too low, whereas the inhibitory agent will be completely insolubilized and its removal by dissolution will become impossible if the temperature is too high. Accordingly, it is preferable for the drying temperature to be 80°C or more and 180°C or less, more preferably 110°C or more and 160°C or less. The drying time is preferably one minute or more and 30 minutes or less from the viewpoint of processability.

For the present invention, it is preferable for the dissolution and removal of the inhibitory agent to be carried out by leaving the fibrous base material containing the inhibitory agent in steam at a temperature of 100°C or more and in hot water at a temperature of 60°C or more and 100°C or less, followed by squeezing the liquid using a mangle or the like as required, to achieve dissolution and removal.

The sea removal treatment can be carried out by immersing the fibrous base material containing the island-in-sea composite fiber in a liquid and then squeezing the liquid. Solvents usable for sea component dissolution include organic solvents such as toluene and trichloroethylene when the sea component is polyethylene, polypropylene, or polystyrene; they include alkaline solutions such as aqueous sodium hydroxide solution when the sea component is a copolymerized polyester or polylactic acid; and they include hot water when the sea component is polyvinyl alcohol.

Described next is water dispersed polyurethane that may be used for the invention.

The polyurethane is preferably a polyurethane resin produced through reaction among a polymeric polyol having a number average molecular weight of preferably 500 or more and 5,000 or less, an organic polyisocyanate, and a chain extender. In addition, a compound containing an active hydrogen component having a hydrophilic group may be used in combination to increase the stability of the water dispersed polyurethane dispersion liquid. The use of a polymeric polyol having a number average molecular weight of 500 or more, more preferably 1,500 or more, prevents the texture from stiffening, and the use of one having a number average molecular weight of 5,000 or less, more preferably 4,000 or less, serves to maintain a strength required for a polyurethane to work as binder.

Such polymeric polyols include polyether based polyols such as polyethylene glycol, polypropylene glycol, polytetramethylene glycol, and copolymerized polyols which are formed by combining these substances.

Useful polyester based polyols include, for example, polyester polyols produced by condensation of a low molecular weight polyol and a polybasic acid, and polyols produced by ring opening polymerization of a lactone or the like.

Such low molecular weight polyols include, for example, linear alkylene glycols such as ethylene glycol, 1,3-propylene glycol, 1,4-butanediol, 1,5-pentanediol, 1,6-hexanediol, 1,9-nonanediol, and 1,10-decanediol; branched alkylene glycols such as neopentyl glycol, 3-methyl-1,5-pentanediol, 2,4-diethyl-1,5-pentanediol, and 2-methyl-1,8-octanediol; alicyclic diols such as 1,4-cyclohexanediol; and aromatic divalent alcohols such as 1,4-bis(β-hydroxyethoxy) benzene, which may be used singly or as a combination of two or more thereof. Furthermore, an adduct which is formed by adding one of various alkylene oxides to bisphenol A is also usable.

Furthermore, for example, one or a plurality selected from the following can be used as the polybasic acid described above: succinic acid, maleic acid, adipic acid, glutaric acid, pimelic acid, suberic acid, azelaic acid, sebacic acid, dodecane dicarboxylic acid, phthalic acid, isophthalic acid, terephthalic acid, and hexahydroisophthalic acid.

Useful polylactone polyols include those polylactone polyols produced from one or a plurality selected from γ-butyrolactones, γ-valerolactones, and ε-caprolactones by ring opening polymerization using a polyhydric alcohol as initiator.

Useful polycarbonate based polyols include compounds produced through reaction between a polyol and a carbonate compound such as dialkyl carbonate and diaryl carbonate.

Polyols useful as material for producing a polycarbonate polyol include those polyols listed previously as raw materials for producing polyester polyol. Useful dialkyl carbonates include dimethyl carbonate and diethyl carbonate, and useful diaryl carbonates include diphenyl carbonate.

For the polyurethane containing a hydrophilic group to be used for the present invention, the component to be used to add a hydrophilic group to the resin may be, for example, an active hydrogen component containing a hydrophilic group. Such hydrophilic group-containing active hydrogen components include compounds that contain a nonionic group and/or anionic group and/or cationic group and an active hydrogen.

Such compounds having a nonionic group and an active hydrogen include those compounds having two or more active hydrogen components or two or more isocyanate groups and having a side chain that contains a polyoxyethylene glycol group with a molecular weight of 250 to 9,000, as well as triols such as trimethylolpropane and trimethylolbutane.

Such compounds having an anionic group and an active hydrogen include carboxyl group-containing compounds such as 2,2-dimethylol propionic acid, 2,2-dimethylol butane, 2,2-dimethylol valeric acid, and derivatives thereof; sulfonic group-containing compounds such as 1,3-phenylene diamine-4,6-disulfonic acid, 3-(2,3-dihydroxy propoxy)-1-propane sulfonic acid, and derivatives thereof; and salts produced by neutralizing these compounds with a neutralization agent.

Such compounds containing a cationic group and an active hydrogen include tertiary amino group-containing compounds such as 3-dimethyl aminopropanol, N-methyl diethanolamine, and N-propyl diethanolamine, and derivatives thereof.

These active hydrogen components containing a hydrophilic group may be used in the form of salts produced by neutralization with a neutralization agent.

If a sulfonic group, carboxyl group, etc., selected particularly from the aforementioned hydrophilic group-containing active hydrogen components are introduced into polyurethane, it serves not only to enhance the hydrophilicity of the polyurethane molecule, but if a crosslinking agent as described later is added, it also serves to improve the physical properties by allowing the polyurethane molecule to form a three dimensional crosslinked structure. For the production, therefore, it is preferable to use an appropriate one selected from the aforementioned hydrophilic group-containing active hydrogen components.

Useful chain extenders include those compounds used in conventional polyurethane production processes and in particular, it is preferable to use a low molecular weight compound containing, in its molecule, two or more active hydrogen atoms that can react with an isocyanate group and having a molecular weight of 600 or less. Specific examples include diols such as ethylene glycol, propylene glycol, 1,4-butanediol, 1,6-hexanediol, 3-methyl-1,5-pentanediol, neopentyl glycol, 1,4-cyclohexanediol, and xylylene diglycol; triols such as trimethylol propane and trimethylol butane; diamines such as hydrazine, ethylene diamine, isophorone diamine, piperazine, 4,4'-methylene dianiline, tolylene diamine, xylylene diamine, hexamethylene diamine, and 4,4'-dicyclohexylmethane diamine; triamines such as diethylene triamine; and aminoalcohols such as aminoethyl alcohol and aminopropyl alcohol.

Useful organic polyisocyanates include aliphatic diisocyanates such as hexamethylene diisocyanate; alicyclic diisocyanates such as isophorone diisocyanate (hereinafter occasionally abbreviated as IPDI), hydrogenated xylylene diisocyanate, and dicyclohexylmethane diisocyanate (hereinafter occasionally abbreviated as hydrogenated MDI); aromatic/aliphatic diisocyanates such as xylylene diisocyanate (hereinafter occasionally abbreviated as XDI) and tetramethyl-m-xylylene diisocyanate; and aromatic diisocyanates such as tolylene diisocyanate (hereinafter occasionally abbreviated as TDI), 4,4'-diphenyl methane diisocyanate (hereinafter occasionally abbreviated as MDI), tolidine diisocyanate, and naphthalene diisocyanate (hereinafter occasionally abbreviated as NDI).

If polyurethane is used in the form of particles to be dispersed in an aqueous medium, the hydrophilic group-containing active hydrogen component is preferably adopted as a component of the polyurethane from the viewpoint of dispersion stability of the polyurethane, and according to a more preferred embodiment, a neutralized salt is used.

The neutralization agents that are usable to produce a neutralized salt of a compound containing a hydrophilic group and an active hydrogen include amine based compounds such as trimethylamine, triethylamine, and triethanolamine, and hydroxides such as sodium hydroxide and potassium hydroxide.

There are no specific limitations on the addition of a neutralization agent to be used for a hydrophilic group-containing active hydrogen component, and it may be added either before or after the polyurethane polymerization step, either before or after the aqueous medium dispersion step, etc., but from the viewpoint of the stability of the polyurethane in the aqueous dispersion liquid, it is preferable to add it before the step of dispersion in an aqueous medium or during the step of dispersion in an aqueous medium.

From the viewpoint of dispersion stability and water resistance of the polyurethane, the content of the hydrophilic group-containing active hydrogen component and/or salts thereof is preferably 0.005 to 30 mass%, more preferably 0.01 to 15 mass%, relative to the mass of the polyurethane.

If polyurethane is used in the form of particles to be dispersed in an aqueous medium, a surface active agent, in addition to the aforementioned hydrophilic group-containing active hydrogen component, may be used as an external emulsifier for the polyurethane to allow the polyurethane to be dispersed in an aqueous medium.

Such surface active agents include nonionic surface active agents, anionic surface active agents, cationic surface active agents, and amphoteric surface active agents. These surface active agents may be used singly or as a combination of two or more thereof.

Useful nonionic surface active agents include alkylene oxide addition type ones such as polyoxyethylene nonylphenyl ether, polyoxyethylene lauryl ether, and polyoxyethylene stearyl ether, and polyhydric alcohol type ones such as glycerin monostearate. Useful anionic surface active agents include sodium lauryl sulfate, lauryl ammonium sulfate, and sodium dodecylbenzene sulfonate.

Useful cationic surface active agents include quaternary ammonium salts such as distearyl dimethylammonium chloride. Useful amphoteric surface active agents include methyl laurylaminopropionate, lauryl dimethylbetaine, and coconut fatty acid amidopropyldimethylamino acetic acid betaine.

A conventional polyurethane dispersion liquid production method may be applied to prepare a dispersion liquid of polyurethane to be used for the present invention. Available ones include, for example, a method in which a liquid polymer prepared by reacting a polyisocyanate, polyol, chain extender, and/or hydrophilic group-containing polyol as described above is emulsified in water in the presence of an emulsifier, a method in which a prepolymer having an isocyanate group at an molecular end is prepared by reacting a polyisocyanate, polyol, and/or chain extender, and/or hydrophilic group-containing polyol as described above and the prepolymer is then emulsified in water in the presence of an emulsifier, while or followed by completing the chain elongation reaction using a chain extender, and a method in which a polyisocyanate, polyol, and/or chain extender, and/or hydrophilic group-containing polyol as described above are reacted together and directly emulsified in water without using an emulsifier. When polymerization is performed without forming such a prepolymer or when polymerization of such a prepolymer is performed, it may be carried out in the absence of a solvent or may be carried out in the presence of an organic solvent such as methyl ethyl ketone, toluene, and acetone.

A fibrous base material may be immersed in a water dispersed polyurethane dispersion liquid containing the water dispersed polyurethane synthesized above to add the polyurethane to the fibrous base material, followed by performing heat-drying to achieve coagulation and solidification of the polyurethane.

If a sulfonic group, a carboxyl group, a hydroxyl group, or a primary or secondary amino group is introduced into the polyurethane to be used for the present invention and a crosslinking agent reactive is added to these functional groups after the coagulation of the polyurethane, then a crosslinking reaction with a crosslinking agent proceeds after the formation of a structure (separation between hard segment parts and soft segment parts) caused by coagulation of the polyurethane, unlike the conventional case where a water dispersed polyurethane liquid containing a crosslinking agent is added. This allows the polyurethane to maintain its original coagulation structure to some extent during the formation of a crosslinked structure, and this also serves to prevent the formation of a stiff texture.

Useful crosslinking agents include those having, in one molecule, two or more reactive groups that can react with the reactive groups contained in the polyurethane, and specific examples include polyisocyanate based crosslinking agents (such as water-soluble isocyanate compounds and blocked isocyanate compounds), melamine based crosslinking agents, oxazoline based crosslinking agents, carbodiimide based crosslinking agents, aziridine based crosslinking agents, epoxy crosslinking agents, and hydrazine based crosslinking agents. These crosslinking agents may be used either singly or as a combination of two or more thereof. In the present method blocked isocyanate based crosslinking agents and carbodiimide based crosslinking agents are selected.

A water-soluble isocyanate based compound contains two or more isocyanate groups in a molecule, and examples include the aforementioned organic polyisocyanate-containing compounds. Commercial products include the Bayhydur (registered trademark) series and the Desmodur (registered trademark) series manufactured by Bayer MaterialScience.

A blocked isocyanate based compound contains two or more blocked isocyanate groups in a molecule. A blocked isocyanate group is produced by blocking an organic polyisocyanate compound as described above with a blocking agent, which is, for example, an amine, phenol, imine, mercaptan, pyrazole, oxime, or active methylene. Commercial products thereof include the Elastron (registered trademark) series manufactured by DKS Co., Ltd., the Duranate (registered trademark) series manufactured by Asahi Kasei Chemicals Corporation, and the Takenate (registered trademark) series manufactured by Mitsui Chemicals, Inc.

Useful carbodiimide based crosslinking agents include compounds containing two or more carbodiimide groups in a molecule. Commercial products thereof include the Carbodilite (registered trademark) series manufactured by Nisshinbo Industries, Inc.

Melamine based crosslinking agents include compounds containing two or more methylol groups or methoxy methylol groups in a molecule. Commercial products thereof include the Yuban (registered trademark) series manufactured by Mitsui Chemicals, Inc., the Cymel (registered trademark) series manufactured by Scitex Japan K.K., and the Sumimal (registered trademark) series manufactured by Sumitomo Chemical Co., Ltd. Oxazoline based crosslinking agents include compounds containing two or more oxazoline groups (oxazoline backbones) in a molecule. Commercial products thereof include the Epocros (registered trademark) series manufactured by Nippon Shokubai Co., Ltd.

Epoxy based crosslinking agents include compounds containing two or more epoxy groups in a molecule. Commercial products thereof include the Denacol (registered trademark) series manufactured by Nagase ChemteX Corporation, diepoxy-polyepoxy based compounds manufactured by Sakamoto Yakuhin Kogyo Co., Ltd., and the Epicron (registered trademark) series manufactured by DIC.

Aziridine based crosslinking agents include compounds containing two or more aziridinyl groups in a molecule. Hydrazine based crosslinking agents include hydrazine and compounds containing two or more hydrazine groups (hydrazine backbones) in a molecule.

Among others, preferable functional groups contained in polyurethane include hydroxyl group and/or carboxyl group and/or sulfonic group; the crosslinking agents include polyisocyanate based crosslinking agents and carbodiimide compounds.

The water dispersed polyurethane dispersion liquid to be added to a fibrous base material preferably contains a thermosensitive coagulant from the viewpoint of depressing the migration of the polyurethane during the polyurethane coagulation step to allow the polyurethane to infiltrate uniformly in the fibrous base material.

Useful thermosensitive coagulants include inorganic salts such as sodium sulfate, magnesium sulfate, calcium sulfate, calcium chloride, magnesium chloride, and calcium chloride; and ammonium salts such as sodium persulfate, potassium persulfate, ammonium persulfate, and ammonium sulfate. They may be used either singly or as a combination of two or more thereof in an appropriately adjusted amount, and coagulation is achieve by setting an water dispersed polyurethane coagulation temperature and then heating and destabilizing the water dispersed polyurethane dispersion liquid.

The aforementioned thermosensitive coagulation temperature for a water dispersed polyurethane dispersion liquid is preferably 40°C to 90°C, more preferably 50°C to 80°C, from the viewpoint of storage stability and texture of processed fiber products.

For the present invention, it is important to add a crosslinking agent after coagulation of the polyurethane. However, if a crosslinking agent is added after coagulation of the polyurethane, the liquid containing the crosslinking agent is likely to migrate to the surface layer during the drying step to diminish the crosslinking reaction inside the sheet and accordingly, the crosslinking agent may be added to the polyurethane dispersion liquid as required in order to accelerate the crosslinking reaction in the sheet. The quantity of the crosslinking agent to be added to the polyurethane dispersion liquid is preferably 0.0 mass% or more and 3.0% or less, more preferably 0.0 mass% or more and 0.5 mass% or less, relative to the solid content of the polyurethane. If the quantity of the crosslinking agent added is 3.0% or more, texture softening effect will not be realized and a significantly stiff texture may result when the crosslinking agent is added after coagulation of the polyurethane.

In addition to the thermosensitive coagulants described above, the polyurethane dispersion liquid may further contain other various additives as mentioned below. Examples of these additives include pigments such as carbon black; antioxidants (such as hindered phenolic based, sulfur based, and phosphorous based antioxidants); ultraviolet absorbers (such as benzotriazole based, triazine based, benzophenone based, and benzoate based ultraviolet absorbers); weathering stabilization agents such as hindered amine based photostabilizers; flexible water repellent agents (such as polysiloxane, modified silicone oil, other silicone compounds, polymers based on fluoroalkyl esters of acrylic acids, and other fluorine compound based flexible water repellent agents); wetting agents (such as ethylene glycol, diethylene glycol, propylene glycol, and glycerin based wetting agents); antifoam agents (such as octyl alcohol, sorbitan monooleate, polydimethyl siloxane, polyether modified silicone, and fluorine modified silicone based antifoam agents); fillers (such as fine particles of calcium carbonate, titanium oxide, silica, talc, ceramics, or resin, and hollow bead type fillers); flame retardants (such as halogen based, phosphorus based, antimony based, melamine based, guanidine based, guanylurea based, silicone based, and other inorganic flame retardants); microballoons (such as Matsumoto Microsphere (registered trademark) manufactured by Matsumoto Yushi-Seiyaku Co., Ltd.); foaming agents [examples include dinitrosopentamethylene tetramine (such as Celmike A (registered trademark) manufactured by Sankyo Kasei Co., Ltd.), azodicarbonamide (such as Celmike CAP (registered trademark) manufactured by Sankyo Kasei Co., Ltd.), p,p'-oxy bisbenzenesulfonyl hydrazide (such as Celmike S (registered trademark) manufactured by Sankyo Kasei Co., Ltd.), N,N'-dinitrosopentamethylene tetramine (such as Cellular GX (registered trademark) manufactured by Eiwa Chemical Ind. Co., Ltd.), other organic foaming agents, sodium hydrogen carbonates (such as Celmike 266 (registered trademark) manufactured by Sankyo Kasei Co., Ltd.), and other inorganic foaming agents], 2,2'-azobis[2-methyl-N-(2-hydroxyethyl)propione amide] (such as VA-086 manufactured by Wako Pure Chemical Industries, Ltd.); viscosity adjustors; plasticizers (such as phthalic esters, and adipic esters); and mold releasing agents (wax based, metal soap based, and their mixture based mold releasing agents).

Available methods for coagulation of water dispersed polyurethane include the use of moist heat produced by steam, dry heat produced by hot air, infrared ray, hot water, and acid solvent. Of these, the use of hot water coagulation or acid coagulation is preferred from the viewpoint of softening of the texture.

For the present invention, it is important to add a crosslinking agent after coagulation of water dispersed polyurethane and then heat it. The addition of a crosslinking agent and subsequent heating causes the water dispersed polyurethane to react with the crosslinking agent and therefore, the crosslinking reaction of the water dispersed polyurethane proceeds regardless of what method is used for the coagulation of the water dispersed polyurethane. In addition, a good texture equivalent to that of the material before the addition of the crosslinking agent can be maintained. This is inferred to be because, unlike the conventional case where a water dispersed polyurethane liquid containing a crosslinking agent is added, the crosslinking reaction with a crosslinking agent proceeds after the formation of a structure (separation between hard segment parts and soft segment parts) caused by coagulation of the polyurethane, allowing the polyurethane to maintain its original coagulation structure.

The quantity of the crosslinking agent to be added after the coagulation of the water dispersed polyurethane is preferably 0.5 mass% or more and 10.0% or less, more preferably 1.0 mass% or more and 5.0 mass% or less, relative to the solid content of the polyurethane. If the crosslinking agent added accounts for 0.5% or less, the crosslinking reaction with the crosslinking agent will not proceed rapidly, whereas if the crosslinking agent added accounts for 10.0 mass% or more, a significantly stiff texture will result.

For the present invention, it is important to impregnate a fibrous base material with a water dispersed polyurethane liquid and then coagulate it, followed by addition of a crosslinking agent and subsequent heating, The drying step acts to accelerate the reaction between the crosslinking agent and the polyurethane molecules to form a crosslinked structure in the polyurethane. This also accelerate the fusion of the water dispersed polyurethane emulsion so that the molecular structure of the polyurethane is optimized to improve the moist heat resistance.

In regard to the drying temperature, the crosslinking reaction will not proceed rapidly when the drying temperature is too low, whereas heat decomposition of the polyurethane is accelerated when the temperature is too high, and therefore, the drying is performed at a temperature of 150°C or more and 180°C or less. From the viewpoint of processability, the drying time is preferably 1 minute or more and 60 minutes or less, more preferably 1 minute or more and 30 minutes or less.

According to a preferred embodiment, polyurethane is added first, and the resulting polyurethane-impregnated sheet-like article is divided into halves or a few parts in the sheet thickness direction, which ensures a high production efficiency.

Prior to the hair raising step described later, a lubricant such as silicone emulsion may be added to the polyurethane-impregnated sheet-like article. Furthermore, the addition of an antistatic agent prior to the hair raising step is preferred for making it less likely that ground powder produced from the sheet-like article by grinding will deposit on the sandpaper.

A hair raising step may be performed in order to raise hairs on the surface of the sheet-like article. The hair raising treatment can be performed by grinding with sandpaper, roll sander, or the like.

The thickness of the sheet-like article is preferably about 0.1 to 5.0 mm because if the thickness is too small, physical characteristics such as tensile strength and tear strength of the sheet-like article will deteriorate whereas if the thickness is too large, the texture of the sheet-like article will become stiff.

The sheet-like article may be dyed. A preferable dyeing method is the use of a jet dyeing machine which has a kneading effect to soften the sheet-like article while dyeing the sheet-like article. If the dyeing temperature is too high, the polyurethane may degrades, whereas if the temperature is too low, the dye attachment to the fiber will not be achieved sufficiently. Therefore, the dyeing temperature may be set depending on the kind of fiber used, and in general, the dyeing temperature is preferably 80°C or more and 150°C or less, more preferably 110°C or more and 130°C or less.

An appropriate dye is selected to meet the type of the fiber that constitutes the fibrous base material. For example, a dispersed dye may be used for a polyester-based fiber, and an acidic dye or a metal-containing dye may be used for a polyamide based fiber. Moreover, a combination of these dyes may also be employed. In the case where the dyeing is carried out with a dispersed dye, reduction cleaning may be performed after the dyeing.

According to another preferred embodiment, a dyeing assistant may be used in the dyeing step. The use of a dyeing assistant can serve to improve the dyeing uniformity and reproducibility. Furthermore, finishing with a softening agent (such as silicone), an antistatic agent, a water repellent, a flame retardant, a light resistance agent, an antimicrobial agent, etc. may be performed simultaneously with dyeing in the same bath or sequentially by adding them after the dyeing step.

The sheet-like article obtained according to the present invention can be suitably used mainly as artificial leather components of, for example, the following: furniture, chairs and wall materials; interior materials with highly graceful external appearance for surface decoration of seats, ceilings, interiors, etc. of vehicles including motor vehicles, trains, and aircraft; shirts, jackets, and uppers, trims, etc. of casual shoes, sports shoes, men's shoes, women's shoes, etc.; bags, belts, wallets, etc., and clothing materials used as parts thereof; and industrial use materials such as wiping clothes, grinding clothes, and CD curtains.

### Examples

Hereinafter, the production method for sheet-like articles according to the present invention is described in more detail with reference to Examples, although the present invention is not limited only to these Examples.

### [Evaluation methods]

### (1) Stress retention rate at 10% elongation of sheet-like article:

According to JIS L1913 6.3.1 (2010 Edition), the stress at 10% elongation (N/cm) of a sheet (greige) before the dyeing step was measured using a constant extension rate type tensile tester under the conditions of a specimen width of 2 cm, clamp distance of 10 cm, and tension speed of 10 cm/min. Five measurements (N=5) were taken in a dry state and in a wet state after immersing the sheet in water at normal temperature for 10 minutes, and the stress retention rate at 10% elongation in a wet state was calculated by the following formula: stress retention rate at 10% elongation = stress in wet state (average of 5 measurements) / stress in dry state (average of 5 measurements) × 100.

### (2) Wear resistance of sheet-like article:

Martindale abrasion evaluation (durability evaluation) was conducted. Using a Model 406 Martindale abrasion testing machine manufactured by James H. Heal & Co. together with Abrasive Cloth SM25 reference friction cloth provided by the manufacturer, an artificial leather specimen was subjected to 20,000 cycles of abrasion under a load equivalent to 12 kPa and the appearance of the artificial leather was observed and evaluated visually. The evaluation criteria were as follows: a specimen was rated as grade 5 when it was free of changes in appearance as compared to the state before the test and rated as grade 1 when suffering from a large number of fluff balls, in decrements of 0.5 between them. Specimens rated as grade 4 or grade 5 were judged to be acceptable.

### (3) External appearance quality of sheet-like article

The external appearance quality of a sheet-like article was rated on a scale of 1 to 5 in visual inspection and sensory evaluation by a total of 20 raters made up of 10 males and 10 females who were healthy adults. The rating given by the greatest number of raters was adopted to represent the external appearance quality. For the external appearance quality, specimens rated as grade 4 or grade 5 were judged to be acceptable.
Grade 5: Uniformly raised hairs were seen and the dispersed state of fiber was good, resulting in a good external appearance.
Grade 4: This grade is between grade 5 and grade 3.
Grade 3: The dispersed state of fiber is partially not very good, but raised hairs were found, resulting in a fairly good external appearance.
Grade 2: This grade is between grade 3 and grade 1.
Grade 1: The dispersed state of fiber is very poor as a whole, and the external appearance is at rejectable level.

### (4) Texture of sheet-like article:

The texture of a sheet-like article was rated on a scale of 1 to 4 based on haptic sensory evaluation by a total of 20 raters made up of 10 males and 10 females who were healthy adults, and the rating given by the greatest number of raters was taken to represent the texture. Specimens rated as o or Δ (flexible and high crease recoverability) were judged to have a good texture.
○: Comparable in flexibility and crease recoverability to artificial leather products produced from an organic solvent based polyurethane and having the same level of unit weight.
Δ: Relatively high in flexibility and crease recoverability, though lower in flexibility and crease recoverability compared to artificial leather products produced from an organic solvent based polyurethane and having the same level of unit weight.
×: The sheet is stiff and has a paper-like feel.

### [Preparation of polyurethane dispersion liquid]

A polyhexamethylene carbonate product with a Mn of 2,000 adopted as polyol component, IPDI as isocyanate component, and 2,2-dimethylol propionic acid as the intramolecular hydrophilic group were reacted in an acetone solvent to prepare a prepolymer. Then, ethylene glycol adopted as chain extender, polyoxyethylene nonylphenyl ether as external emulsifier, and water were added and subjected to chain elongation reaction and emulsification, followed by removal of acetone under reduced pressure to provide water dispersed polyurethane dispersion liquid.

### [Example 1]

Polyethylene terephthalate copolymerized with 8 mol% sodium 5-sulfoisophthalate was used as sea component and polyethylene terephthalate was used as island component to produce an island-in-sea type composite fiber in which the composition ratio was 20 mass% sea component and 80 mass% island component and the number of islands was 16 islands/filament, and the average filament diameter was 20 µm. The island-in-sea type composite fiber obtained was cut into pieces with a fiber length of 51 mm to provide staple. It was then passed through a card and a cross lapper to form a fiber web, which was subjected to needle punching to produce a nonwoven fabric.

The nonwoven fabric obtained in this manner was shrunk by immersing it in hot water at a temperature of 97°C for 5 minutes and then dried at a temperature of 100°C for 10 minutes. Subsequently, an aqueous solution containing 10 mass% (solid content) of PVA with a degree of saponification of 99% and a degree of polymerization of 1,400 [NM-14, manufactured by Nippon Synthetic Chemical Industry Co., Ltd.] was added to the resulting nonwoven fabric, followed by drying at a temperature of 100°C for 10 minutes and additional heating at a temperature of 150°C for 20 minutes to provide a sheet.

Then, an aqueous sodium hydroxide solution with a concentration of 100 g/L was heated at 50°C and the sheet obtained above was immersed in it for 20 minutes to remove the sea component from the island-in-sea type fiber, thereby providing a sea-free sheet. The filaments at the surface of the resulting sea-free sheet had an average filament diameter of 4.2 µm. Subsequently, the resulting sea-free sheet was impregnated with a dispersion liquid prepared by adding an association type viscosity improver [Thickner 627N, manufactured by San Nopco Limited] to an effective component content of 4 mass% relative to the polyurethane solid content and also adding magnesium sulfate to 1.2 mass% relative to the polyurethane solid content to water dispersed polyurethane dispersion liquid, and the sheet was then treated in hot water at a temperature of 95°C for 3 minutes and air-dried at a temperature of 100°C for 15 minutes to provide a sheet containing water dispersed polyurethane in such manner that the mass of the polyurethane accounted for 31 mass% of the mass of the island component of the nonwoven fabric.

Then, the sheet was immersed in hot water at a temperature of 98°C for 10 minutes to remove the PVA added before, followed by drying at a temperature of 100°C for 10 minutes. After the drying, the sheet was impregnated with a liquid having a concentration adjusted in such a manner that a carbodiimide based crosslinking agent [Carbodilite (registered trademark) V-02-L2, manufactured by Nisshinbo Chemical Inc.] would be added to an effective component content of 5 mass% relative to the quantity of the polyurethane added, and then heated in a drier at a temperature of 160°C for 20 minutes for drying the sheet and accelerating the crosslinking reaction.

Then, the sea-free sheet was cut in half perpendicularly to the thickness direction using a cutting-in-half machine with an endless band knife, and the non-cut surface was ground with 120-mesh and 240-mesh sandpapers to raise hairs and dyed with a disperse dye using a circular dyeing machine, followed by reduction cleaning to provide artificial leather with a unit weight of 255 g/m². The resulting artificial leather was high in both abrasion resistance and external appearance quality and had a good texture. Furthermore, the greige in a wet state before the dyeing step had a stress retention rate at 10% elongation of 73%. Results are given in Table 1.

### [Example 2]

Except for using a blocked isocyanate based crosslinking agent [Elastron (registered trademark) BN-69, manufactured by DKS Co., Ltd.], the same procedure as in Example 1 was carried out to provide artificial leather with a unit weight of 258 g/m². The resulting artificial leather was high in both abrasion resistance and external appearance quality and had a good texture. Furthermore, the greige in a wet state before the dyeing step had a stress retention rate at 10% elongation of 74%. Results are given in Table 1.

### [Example 3]

Polyethylene terephthalate copolymerized with 8 mol% sodium 5-sulfoisophthalate was used as sea component and polyethylene terephthalate was used as island component to produce an island-in-sea type composite fiber in which the composition ratio was 20 mass% sea component and 80 mass% island component, the number of islands was 16 islands/filament, and the average filament diameter was 20 µm. The island-in-sea type composite fiber obtained was cut into pieces with a fiber length of 51 mm to provide staple. It was then passed through a card and a cross lapper to form a fiber web, which was subjected to needle punching to produce a nonwoven fabric.

The nonwoven fabric obtained in this manner was shrunk by immersing it in hot water at a temperature of 97°C for 2 minutes, and then dried at a temperature of 100°C for 5 minutes. Subsequently, the resulting nonwoven fabric was impregnated with a dispersion liquid prepared by adjusting a water dispersed polyurethane dispersion liquid to a polyurethane solid content of 20%, adding an association type viscosity improver [Thickner 627N, manufactured by San Nopco Limited] to an effective component content of 4 mass% relative to the polyurethane solid content, and also adding magnesium sulfate to 1.2 mass% relative to the polyurethane solid content. The fabric was then treated in hot water at a temperature of 95°C for 3 minutes and air-dried at a temperature of 100°C for 15 minutes, thereby providing a sheet containing water dispersed polyurethane in such a manner that the mass of the polyurethane accounted for 30 mass% relative to the mass of the island component of the nonwoven fabric.

Subsequently, the sheet thus obtained was immersed in an aqueous sodium hydroxide solution with a concentration of 10 g/L heated at 95°C and treated for 25 minutes to remove the sea component from the island-in-sea type composite fiber, thus providing a sea-free sheet. The filaments at the surface of the resulting sea-free sheet had an average filament diameter of 4.2 µm. After the sea removal step, the sheet was impregnated with a liquid having a concentration adjusted in such a manner that a blocked isocyanate based compound [Elastron (registered trademark) BN-69, manufactured by DKS Co., Ltd.] would be added to an effective component content of 5 mass% relative to the quantity of the polyurethane added, and then heated in a drier at a temperature of 160°C for 20 minutes for drying the sheet and accelerating the crosslinking reaction.

Then, the sea-free sheet was cut in half perpendicularly to the thickness direction using a cutting-in-half machine with an endless band knife, and the non-cut surface was ground with 120-mesh and 240-mesh sandpapers to raise hairs and dyed with a disperse dye using a circular dyeing machine, followed by reduction cleaning to provide artificial leather with a unit weight of 262 g/m². The resulting artificial leather had high wear resistance and appearance quality and also had a good texture. Furthermore, the greige in a wet state before the dyeing step had a stress retention rate at 10% elongation of 71%. Results are given in Table 1.

### [Example 4]

Except for using steam at a temperature of 95°C and a humidity of 100%, instead of hot water at 95°C, for the coagulation of polyurethane and omitting the addition of a viscosity improver to the water dispersed polyurethane dispersion liquid, the same procedure as in Example 3 was carried out to provide artificial leather with a metsuke of 263 g/m². The resulting artificial leather were high in both wear resistance and appearance quality. It had a somewhat paper-like texture compared to the samples produced by a process containing a hot water coagulation step. Furthermore, the greige in a wet state before the dyeing step had a stress retention rate at 10% elongation of 73%. Results are given in Table 1.

### [Example 5]

Except for performing impregnation with a dispersion liquid prepared by further adding, to the water dispersed polyurethane dispersion liquid, a carbodiimide based crosslinking agent [Carbodilite (registered trademark) V-02-L2, manufactured by Nisshinbo Chemical Inc.] to an effective component content of 3 mass% relative to the polyurethane solid content and also except for using an impregnation liquid having a concentration adjusted so as to allow the crosslinking agent to be added after the addition of polyurethane to an effective component content of 3 mass% relative to the quantity of the polyurethane added, the same procedure as in Example 2 was carried out to produce artificial leather with a unit weight of 266 g/m². The resulting artificial leather had high wear resistance and appearance quality and also had a good texture. Furthermore, the greige in a wet state before the dyeing step had a stress retention rate at 10% elongation of 77%. Results are given in Table 1.

### [Example 6]

Except that the same island-in-sea composite fiber as in Example 1 was passed through a card and a cross lapper to form fiber webs and the resulting webs were stacked, followed by sandwiching the stack of fiber webs between two pieces of woven fabric with a weaving density of 96 ends and 76 picks formed of 84-dtex, 72-filament twisted yarns used as both warp and weft and processing the stack by needle punching to provide laminate nonwoven fabric; that water dispersed polyurethane resin was added in such a manner that the mass of the polyurethane accounted for 28 mass% relative to the mass of the sea-free nonwoven fabric; that the fabric was cut in halves, followed subjecting the exposed surface to hair raising treatment; the same procedure as in Example 2 was carried out to produce artificial leather with a metsuke of 398 g/m². The resulting artificial leather had high wear resistance and appearance quality and also had a good texture. Furthermore, the greige in a wet state before the dyeing step had a stress retention rate at 10% elongation of 77%. Results are given in Table 1.

### [Example 7]

Except for using a hot air drier at a temperature of 120°C for 20 minutes, instead of hot water at 95°C, for the coagulation of polyurethane, the same procedure as in Example 2 was carried out to provide artificial leather with a unit weight of 260 g/m². The resulting artificial leather were high in both wear resistance and appearance quality. It had a somewhat paper-like texture compared to the samples produced by a process containing a hot water coagulation step. Furthermore, the greige in a wet state before the dyeing step had a stress retention rate at 10% elongation of 76%. Results are given in Table 1.

### [Comparative example 1]

Except for omitting the addition of a crosslinking agent, the same procedure as in Example 1 was carried out to produce artificial leather with a unit weight of 260 g/m². The resulting artificial leather suffered from pilling formation and low wear resistance and had rough appearance quality with a disturbed surface nap. It had a good texture. Furthermore, the greige in a wet state before the dyeing step had a low stress retention rate at 10% elongation of 51%. Results are given in Table 1.

### [Comparative example 2]

Except for adding, to a water dispersed polyurethane dispersion liquid, a crosslinking agent to an effective component content of 5 mass% relative to the polyurethane solid content, instead of adding it after the coagulation of polyurethane, the same procedure as in Example 2 was carried out to produce artificial leather with a unit weight of 260 g/m². The resulting artificial leather suffered from a little pilling formation and low wear resistance and had low-uniformity appearance quality. It had a somewhat paper-like texture. Furthermore, the greige in a wet state before the dyeing step had a low stress retention rate at 10% elongation of 62%. Results are given in Table 1.

### [Comparative example 3]

Except for adding, to a water dispersed polyurethane dispersion liquid, a crosslinking agent to an effective component content of 5 mass% relative to the polyurethane solid content, instead of adding it after the coagulation of polyurethane, the same procedure as in Example 4 was carried out to produce artificial leather with a unit weight of 262 g/m². The resulting artificial leather had a good wear resistance and had relatively uniform appearance quality. It had a somewhat paper-like texture. Furthermore, the greige in a wet state before the dyeing step had a stress retention rate at 10% elongation of 65%. Results are given in Table 1.

### [Table 1]

**[Table 1]**

| Examples and comparative example | Greige | Artificial leather | | |
|---|---|---|---|---|
| | stress retention rate at 10% elongation in wet state (wet vs. dry) [%] | wear resistance [grade] | appearance quality [grade] | texture [-] |
| Example 1 | 73 | 4.5 | 4 | ○ |
| Example 2 | 74 | 4.5 | 4 | ○ |
| Example 3 | 71 | 4.5 | 4 | ○ |
| Example 4 | 73 | 4.5 | 4 | Δ |
| Example 5 | 75 | 4.5 | 4 | ○ |
| Example 6 | 77 | 4.5 | 4 | ○ |
| Example 7 | 76 | 4.5 | 4 | Δ |
| Comparative example 1 | 51 | 2 | 2 | ○ |
| Comparative example 2 | 62 | 3 | 3 | × |
| Comparative example 3 | 65 | 4 | 3 | × |

## Claims

1. A production method for sheet-like articles comprising the steps for preparing a sheet formed by impregnating a fibrous base material with water dispersed polyurethane as binder, coagulating the sheet, adding a crosslinking agent thereto, and heating the sheet at a temperature 150°C or more and 180°C or less, and wherein the crosslinking agent is selected from blocked isocyanate based compounds and carbodiimide based crosslinking agents..

2. A production method for sheet-like articles as set forth in claim 1, wherein the crosslinking agent added after the coagulation of water dispersed polyurethane accounts for 0.5 mass% or more and 10.0 mass% or less relative to the mass of the water dispersed polyurethane.

3. A production method for sheet-like articles as set forth in either claim 1 or 2, wherein the crosslinking agent added before the coagulation of water dispersed polyurethane accounts for 0.0 mass% or more and 3.0 mass% or less relative to the mass of the water dispersed polyurethane.

4. A production method for sheet-like articles as set forth in any one of claims 1 to 3, wherein the crosslinking agent added before the coagulation of water dispersed polyurethane accounts for 0.0 mass% or more and 0.5 mass% or less relative to the mass of the water dispersed polyurethane.

5. A production method for sheet-like articles as set forth in any one of claims 1 to 4, wherein the polymer molecule of the water dispersed polyurethane contains a hydrophilic group.

6. A production method for sheet-like articles as set forth in any one of claims 1 to 5, wherein the fibrous base material comprises ultrafine fiber-generating type fiber and/or ultrafine fiber.

## Patentansprüche

1. Herstellungsverfahren für plattenförmige Gegenstände, umfassend die Schritte zur Herstellung einer Platte, die durch Imprägnieren eines faserförmigen Basismaterials mit in Wasser dispergiertem Polyurethan als Bindemittel, Koagulieren der Platte, Zusetzen eines Vernetzers und Erhitzen der Platte auf eine Temperatur von 150 °C oder mehr und 180 °C oder weniger gebildet wird, wobei der Vernetzer aus Verbindungen auf Basis von blockiertem Isocyanat und Carbodiimid-basierten Vernetzern ausgewählt ist.

2. Herstellungsverfahren für plattenförmige Gegenstände nach Anspruch 1, wobei der nach dem Koagulieren des in Wasser dispergierten Polyurethans zugesetzte Vernetzer 0,5 Massen-% oder mehr und 10,0 Massen-% oder weniger, bezogen auf die Masse des in Wasser dispergierten Polyurethans, ausmacht.

3. Herstellungsverfahren für plattenförmige Gegenstände nach Anspruch 1 oder 2, wobei der vor dem Koagulieren des in Wasser dispergierten Polyurethans zugesetzte Vernetzer 0,0 Massen-% oder mehr und 3,0 Massen-% oder weniger, bezogen auf die Masse des in Wasser dispergierten Polyurethans, ausmacht.

4. Herstellungsverfahren für plattenförmige Gegenstände nach einem der Ansprüche 1 bis 3, wobei der vor dem Koagulieren des in Wasser dispergierten Polyurethans zugesetzte Vernetzer 0,0 Massen-% oder mehr und 0,5 Massen-% oder weniger, bezogen auf die Masse des in Wasser dispergierten Polyurethans, ausmacht.

5. Herstellungsverfahren für plattenförmige Gegenstände nach einem der Ansprüche 1 bis 4, wobei das Polymermolekül des in Wasser dispergierten Polyurethans hydrophile Gruppen enthält.

6. Herstellungsverfahren für plattenförmige Gegenstände nach einem der Ansprüche 1 bis 5, wobei das faserförmige Basismaterial Fasern vom ultrafeine Fasern erzeugenden Typ und/oder ultrafeine Fasern umfasst.

## Revendications

1. Procédé de production d'articles analogues à une feuille comprenant les étapes de préparation d'une feuille formée en imprégnant un matériau de base fibreux avec du polyuréthane dispersé dans de l'eau en tant que liant, en coagulant la feuille, en y ajoutant un agent de réticulation, et en chauffant la feuille à une température de 150°C ou plus et 180°C ou moins, et dans lequel l'agent de réticulation est choisi parmi des composés à base d'isocyanate bloqués et des agents de réticulation à base de carbodiimide.

2. Procédé de production d'articles analogues à une feuille selon la revendication 1, dans lequel l'agent de réticulation ajouté après la coagulation du polyuréthane dispersé dans de l'eau représente 0,5 % en masse ou plus et 10,0 % en masse ou moins par rapport à la masse du polyuréthane dispersé dans de l'eau.

3. Procédé de production d'articles analogues à une feuille selon la revendication 1 ou 2, dans lequel l'agent de réticulation ajouté avant la coagulation du polyuréthane dispersé dans de l'eau représente 0,0 % en masse ou plus et 3,0% en masse ou moins par rapport à la masse du polyuréthane dispersé dans de l'eau.

4. Procédé de production d'articles analogues à une feuille selon l'une quelconque des revendications 1 à 3, dans lequel l'agent de réticulation ajouté avant la coagulation du polyuréthane dispersé dans de l'eau représente 0,0 % en masse ou plus et 0,5 % en masse ou moins par rapport à la masse du polyuréthane dispersé dans de l'eau.

5. Procédé de production d'articles analogues à une feuille selon l'une quelconque des revendications 1 à 4, dans lequel la molécule polymère du polyuréthane dispersé dans de l'eau contient un groupe hydrophile.

6. Procédé de production d'articles analogues à une feuille selon l'une quelconque des revendications 1 à 5, dans lequel le matériau de base fibreux comprend une fibre génératrice de fibre ultrafine et/ou une fibre ultrafine.
